# EUROPEAN PATENT APPLICATION

(11) **EP 4 506 085 A2**
(43) Date of publication of application: **12.02.2025**
(21) Application number: 24191241.9
(22) Date of filing: 26.07.2024
(51) Int. Cl.: B22F 5/06, B22F 7/06, B23P 6/00, B23P 15/00, B33Y 80/00, B64F 5/40

(54) **ADDITIVE PROCESSING-ENABLED THREADED INSERTS**

(30) Priority: 28.07.2023 US 202318227651
(71) Applicant: RTX Corporation, Farmington, CT 06032 (US)
(72) Inventor: BINEK, Lawrence A., East Hartford, 06118 (US); OTT, Joseph E., East Hartford, 06118 (US)
(74) Representative: Dehns

(57) **Abstract**

A part (32) intended for use with a threaded insert (42) includes a main body manufactured from fully dense material and a plurality of localized, higher porosity, lower strength regions (58) configured to accept a plurality of keys (44) from the threaded insert (42). A method of inserting a threaded insert (42) into a part (32) includes the steps of providing a part (32) with a main body manufactured from fully dense material and a plurality of localized, higher porosity, lower strength regions (58) configured to accept a plurality of keys (44) from the threaded insert (42); forming in the main body a threaded bore (34) configured to accept the threaded insert (42) in which a plurality of localized, higher porosity, lower strength regions (58) surround a periphery of the threaded bore (34); forming a countersink (36) in the threaded bore (34) such that the countersink (36) is adjacent to a top surface (40) of the part (32); and inserting the threaded insert (42) into the threaded bore (34) to position the threaded insert (10, 42) at or below the top surface (40) of the part (32). A plurality of keys (44) inserted into a plurality of dovetail slots (20) established in external threads (14) of the threaded insert (42) align with the plurality of localized, higher porosity, lower strength regions (58). The plurality of keys (44) are driven into the plurality of localized, higher porosity, lower strength regions (58) to anchor the threaded insert (42) into the part (32).

## Description

### BACKGROUND

The present disclosure relates generally to insertion of threaded inserts into parent parts and, more particularly, to use of threaded inserts to perform repair processes, including attachment of brackets to parent parts.

Threaded inserts, such as Keenserts^{®} (a trademark of Howmet Aerospace, Inc., Pittsburgh, Pennsylvania) threaded inserts, are used as replacements for damaged threads in a variety of components. As well known, threaded inserts work well when inserted into aluminum, magnesium, cold rolled steel, and other using stakes or keys that are driven into the parts to secure the threaded inserts. Threaded inserts work less when in the context of very hard materials, such as Inconel^{®} (a trademark of Huntington Alloys Corporation, Huntington, West Virginia) superalloy parts and parts made from similar materials.

### SUMMARY

One aspect of the invention includes a part intended for use with a threaded insert. The part has a main body manufactured from fully dense material and a plurality of localized, higher porosity, lower strength regions configured to accept a plurality of keys from the threaded insert.

In a further embodiment of the previous embodiment, the main body includes a threaded bore configured to accept the threaded insert and wherein the plurality of localized higher porosity, lower strength regions surround a periphery of the threaded bore.

In a further embodiment of any of the previous embodiments, the threaded insert is screwed into the threaded bore such that the plurality of keys from the threaded insert align with the plurality of localized, higher porosity, lower strength regions and the plurality of keys from the threaded insert are driven into the plurality of localized, higher porosity, lower strength regions to anchor the threaded inset into the part.

In a further embodiment of any of the previous embodiments, the threaded insert and the plurality of keys have been removed from the threaded bore and wherein residual portions of the localized, higher porosity, lower strength regions remain detectible in the part.

In a further embodiment of any of the previous embodiments, the part is made from a superalloy material.

In a further embodiment of any of the previous embodiments, the superalloy material is IN718.

Another aspect of the invention includes a method of inserting a threaded insert into a part having the steps of providing a part with a main body manufactured from fully dense material and a plurality of localized, higher porosity, lower strength regions configured to accept a plurality of keys from the threaded insert; forming in the main body a threaded bore configured to accept the threaded insert in which a plurality of localized, higher porosity, lower strength regions surround a periphery of the threaded bore, forming a countersink in the threaded bore such that the countersink is adjacent to a top surface of the part; and inserting the threaded insert into the threaded bore to position the threaded part at or below the top surface of the part. A plurality of keys inserted into a plurality of dovetail slots established in external threads of the threaded insert align with the plurality of localized, higher porosity, lower strength regions. The plurality of keys are driven into the plurality of localized, higher porosity, lower strength regions to anchor the threaded inset into the part.

In a further embodiment of any of the previous embodiments, the part is made using additive manufacturing methods in which a portion of the part including the plurality of localized, higher porosity, lower strength regions is made by programming an additive manufacturing machine to operate in a high speed and low power regime, thereby forming a localized, higher porosity, lower strength material.

In a further embodiment of any of the previous embodiments, the additive manufacturing machine is a laser powder bed fusion additive manufacturing machine.

In a further embodiment of any of the previous embodiments, the additive manufacturing machine is an electron beam powder bed fusion additive manufacturing machine.

In a further embodiment of any of the previous embodiments, the part is made from a superalloy material.

In a further embodiment of any of the previous embodiments, the superalloy material is IN718.

Another aspect of the invention includes a method of making a part intended for use with a threaded insert having the steps of operating an additive manufacturing machine to make a main body with fully dense material and operating the additive manufacturing machine to make a plurality of localized, higher porosity, lower strength regions configured to accept a plurality of keys from the threaded insert.

In a further embodiment of any of the previous embodiments, the additive manufacturing machine is a laser powder bed fusion additive manufacturing machine.

In a further embodiment of any of the previous embodiments, the additive manufacturing machine is an electron beam powder bed fusion additive manufacturing machine.

In a further embodiment of any of the previous embodiments, operating the additive manufacturing machine to make a plurality of localized, higher porosity, lower strength regions configured to accept a plurality of keys from the threaded insert includes programming the additive manufacturing machine to operate in a high speed and low power regime to form a localized, higher porosity, lower strength material.

In a further embodiment of any of the previous embodiments, the part is made from a superalloy material.

In a further embodiment of any of the previous embodiments, the superalloy material is IN718.

### BRIEF DESCRIPTION OF THE DRAWINGS

Fig. 1 is a isometric view of an exemplary threaded insert.
Fig. 2 is a flow chart showing a method for installing a threaded insert into a parent material.
Fig. 3A is a schematic view of a bore drilled into a portion of parent material.
Fig. 3B is a schematic view of the parent material of Fig. 3A with a countersink.
Fig 3C is a schematic view of the parent material of Fig. 3B with threads established by tapping.
Fig. 3D is a schematic view of the parent material of Fig. 3C with a threaded insert installed.
Fig 3E is a schematic view of the parent material of Fig. 3D in which an installation tool is positioned over the threaded insert.
Fig. 4 is an illustration of a threaded insert installed in a hard parent material using current techniques.
Fig. 5A is an illustration of a hard carrier material with bracket before a broaching operation and before installation of a threaded insert.
Fig. 5B is an illustration of the hard parent material of Fig. 4A with bracket after a broaching operation and before installation of a threaded insert.
Fig. 5C is an illustration of the hard parent material of Figs. 4A and 4B with bracket after a broaching operation and after installation of the threaded insert.
Fig. 6A is a view of an exemplary bracket of Fig. 5A having a hole for a drill and tap operation.
Fig. 6B is a view of an exemplary bracket with the hole of Fig. 6A blanked out.
Fig. 6C is a view of an exemplary bracket of Figs. 5A and 5B indicating locations for formation of localized, higher porosity, lower strength regions designed to accept insertion of threaded insert keys.
Fig. 7A is a photomicrograph of material for the main body of the exemplary bracket of Figs. 6A-6C.
Fig. 7B is a photomicrograph of high porosity material for the localized, higher porosity, lower strength regions designed to accept insertion of threaded insert keys of Fig. 6C.

### DETAILED DESCRIPTION

Post-sale sustainment of complex products, including but not limited to gas turbine engines and other aerospace products, is rapidly becoming more important for owners, operators, and manufacturers of such products. In some applications, materials such as Inconel 718 (IN718), a nickel-chromium-based superalloy, and other superalloys are being targeted as replacement substitution materials due to the material data, process specs and controls, and supply chain availability. When used with powder bed fusion laser (PBF-LB) processes, ANCOR AM IN718 (available from GKN Powder Metallurgy), which is a gas atomized austenitic nickel-chromium based superalloy powder, is one of the materials that can be used.

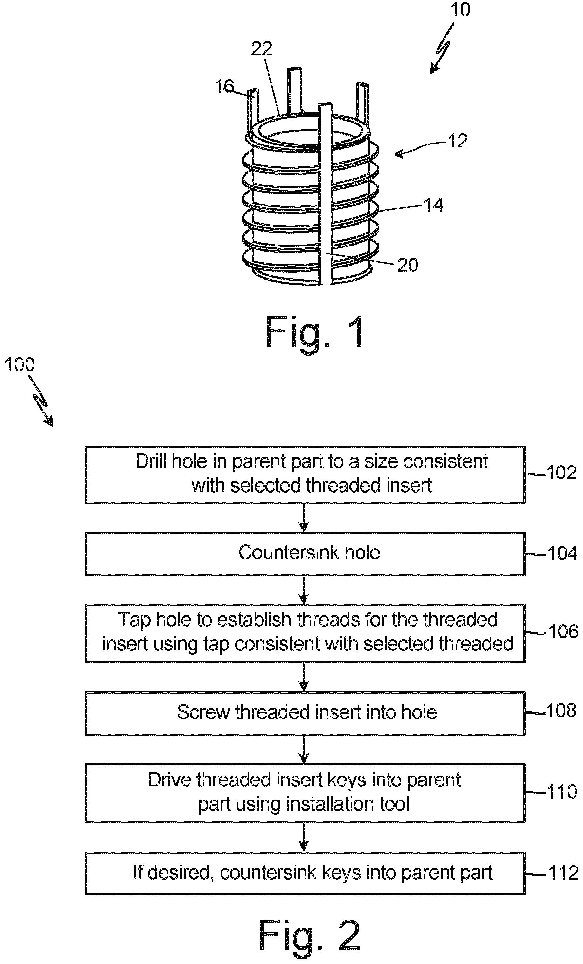

As part of sustainment procedures, it can be desirable to reestablish threads in threaded bores or to use threaded fasteners to attach brackets or other parts to parent material parts. For example, threaded inserts, such as Keenserts^{®} threaded inserts, can be used to perform mechanical post processing thread locking applications such as attaching brackets and performing various repair applications. Fig. 1 shows an exemplary threaded insert 10 that includes a hollow cylindrical threaded body 12 or bushing having external threads 14 and internal threads (not shown). The threaded body 12 includes four "keys" or stakes 16 slidably inserted into dovetail slots 20 established in the external threads 14. In the configuration shown in Fig. 1, the keys 16 are positioned with portions extending above a top end 22 of the threaded body 12. As discussed below, the keys 16 can slide in the dovetail slots 20 when installed into a parent material to anchor the threaded insert 10 into the parent material. Although Fig. 1 shows the threaded insert 10 with four keys 16, threaded insert 10 can have fewer (e.g., two) or more keys 16. Typically, threaded inserts 10 are provided with either two or four keys 16.

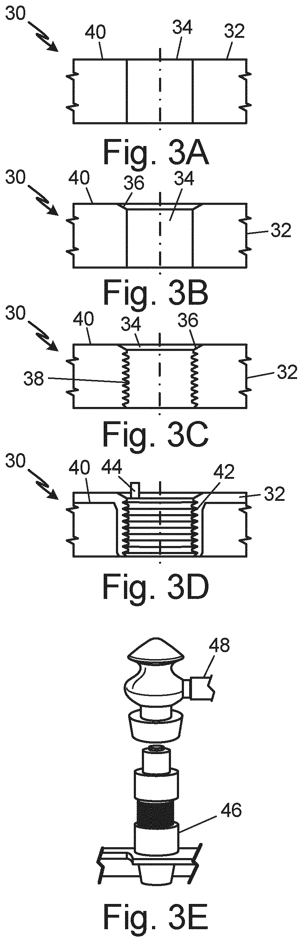

Figs. 2 and 3A-3E will be discussed together. Fig. 2. is a flowchart of a process 100 for installing a threaded insert (42 in Figs. 3A-3E) into a parent material (32 in Figs. 3A-3E) using a conventional process, which is also applicable to the process disclosed further below. Fig. 3A-3E illustrate the steps of Fig. 2. At step 102 in Fig. 2, a hole (34 in Figs. 3A-3E) is drilled into parent material 32 to a size consistent with selected threaded insert 42. The parent material 32 can be any material or part into which threaded insert 42 is to be installed. In some examples, the parent material 32 can be a part having threads that were damaged and need replacing. In such an example, the hole 34 can be drilled to remove the damaged threads. In other examples, the parent material 32 can be a part for which a threaded insert 42 will be used to attach a bracket or other part or component to the parent material 32. In such an example, the hole 34 can be drilled to establish a location for inserting the threaded insert 42 regardless of whether there is a pre-existing threaded or unthreaded hole in the parent material 32.

At step 104 in Fig. 2, a countersink or chamfer (36 in Figs. 3A-3E) is established in hole 34 using standard countersink/chamfering techniques. The countersink 36 is configured to permit the threaded insert 42 to be installed in hole 32 such that threaded insert 42 can be flush with or below a top surface (40 in Figs. 3A-3E) of the parent material 32. As such, the countersink 36 is positioned adjacent to the top surface 40 of the parent material 32

At step 106 in Fig. 2, the hole 32 is tapped using standard tapping techniques to establish threads (38 in Figs. 3A-3E) inside the hole 32. The threads 38 are intended to accommodate threaded insert 42 and should be sized accordingly.

At step 108 in Fig. 2, the threaded insert 42 is screwed into the threads 38 inside hole 32. The threaded insert 42 should seat into the countersink 36 such that the threaded insert 42 is flush with or below the top surface 40 of the parent material 32. At this point, the threaded insert 42 includes keys 44 (two in Fig. 32D) that extend above the top surface 40 of the parent material 32.

At step 110 in Fig. 2, the keys 44 of the threaded insert 42 are driving into the parent material 32 using an installation tool (46 in Figs. 3A-3E) which can be struck with a hammer (48 in Figs. 3A-3E). The installation tool 46 can be any tool configured for use with the threaded insert 42 and is generally designed to apply impacts to the keys 44 to permit them to be driven into the parent material 32 without deforming. The keys 44 should be driven to be at or below the top surface 40 of the parent material 32. Other methods of driving the keys 44 into the parent material 32 can be used, but other methods may be more likely to deform the keys 44. Driving the keys 44 into the parent material 32 "locks" the threaded insert 42 in place preventing rotation of the threaded insert 42 when other components may be installed in internal threads (not shown) of the threaded insert 42. The operation of driving the keys 44 into the parent material 32 can be effective when the parent material 32 is susceptible to plastic deformation. At step 112 in Fig. 2, the keys 44 can be optionally countersunk into the parent material 32.

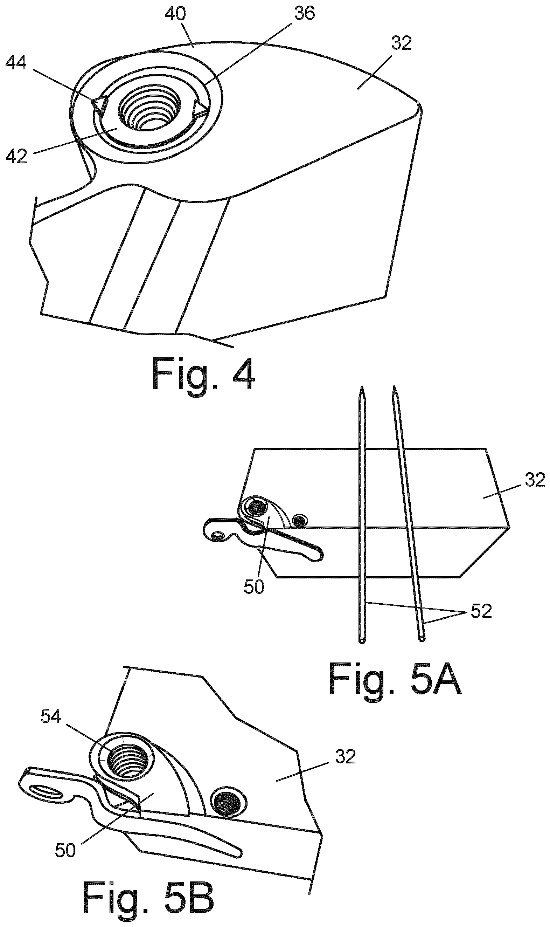

The process for inserting threaded inserts 42 described can be particularly effective when the parent material 32 is susceptible to plastic deformation. In some applications, however, it may be desirable to use threaded inserts with parent materials that are less susceptible to plastic deformation. For example, Inconel 718 (IN718), a nickel-chromium-based superalloy, and other superalloys can be used with threaded inserts. IN718 in powder form, such as ANCOR AM IN718, can be used with powder bed fusion laser (PBF-LB) processes to make replacement parts or attachment parts to be used with threaded inserts. As with robust materials, AM IN718 and similar materials can be challenging to use in combination with threaded inserts, such as Keenserts^{®} threaded inserts to perform mechanical post processing thread locking applications. Fig. 4 is an illustration of a threaded insert 42 installed in a hard parent material 32 using techniques as described above. In this example, parent material 32 is a form of IN718 that is less susceptible to plastic deformation that other materials with which threaded inserts have been used. As can be seen in Fig. 4, driving the keys 44 into the parent material 32 using the techniques described above can result in the keys 44 deforming in a way that either requires undesirable rework or, in a worst case, may result in ineffective anchoring of the threaded insert 42 in the parent material 32.

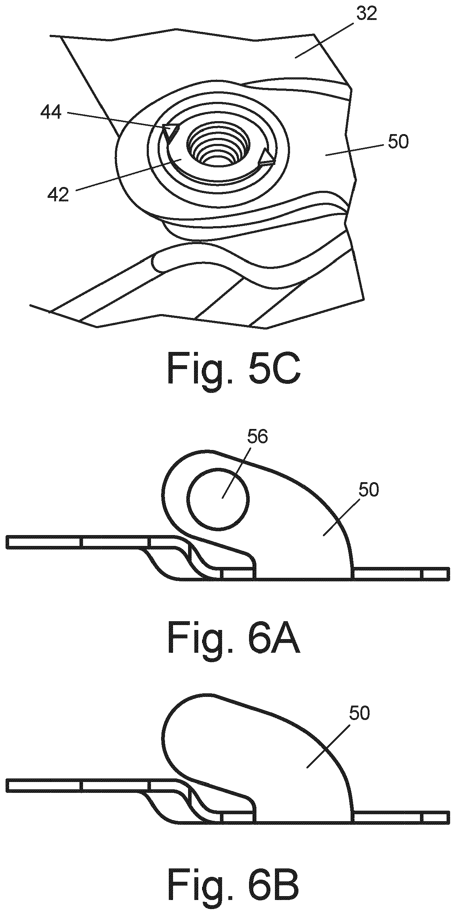

Another approach to addressing the problem, illustrated in Figs. 5A-5C, is to establish grooves in the parent material 32 and an accompanying bracket 50 to accept the keys 44 when driven into the parent material 32 through the accompanying bracket 50. The grooves 54 (see Fig. 5B) can be established by a mechanical method such as filing, using files 52 such as shown in Fig. 5A, broaching, or other machining methods. As can be appreciated, the effort to establish the grooves 54 by any method requires additional process steps, which if performed manually, can require significant exertion. Once the grooves 54 have been established in the parent material 32 and the illustrated accompanying bracket 50, the keys 44 can be driven readily into the parent material 32 through the accompanying bracket 50 to secure the threaded insert 42 in place. A comparison of Fig. 5C with Fig. 4 shows the improved result from the method of mechanically establishing grooved in the parent material 32 and accompanying bracket 50.

An alternate approach is available for parts made with additive manufacturing processes, such as a powder bed fusion-laser process (PBF-LB) and the similar powder bed fusion-electron beam process (PBF-EB). Using such processes, localized regions where threaded insert keys are to be driven into the parts are isolated as separate bodies in the parametric computer aided design (CAD) model for the parts. The localized regions may be roughly the size of the threaded insert keys and, in some examples, may be slightly larger than the size of the threaded insert keys. In this context, "size" means the three-dimensional geometry of the keys, including the cross-sectional area and length of the keys. The objective is to form higher porosity, lower strength regions in the parts that correspond to the regions that will received the threaded insert keys when the keys are driven into the parts to secure the threaded insert in place. The localized lower strength regions permit insertion of the keys without deformation, facilitating the use of threaded inserts of more robust materials for which the use of threaded inserts may otherwise be limited as discussed with regard to Fig. 4 above. Accordingly, a parameter set for an additive manufacturing machine (e.g., PBF-LB, PBF-EB, and similar AM machines) can be created during slice-file generation to set or program the energy source (e.g., laser, electron beam gun, etc.) of the AM machine to operate at a high speed and low power regime (i.e., settings that result in a higher porosity, lower strength material) for those localized lower strength regions designed to accept insertion of the keys. Operating the AM machine with such a slice file, the localized higher porosity, lower strength regions designed to accept insertion of the keys will be formed during the sintering process, while the rest of the part will be formed with process parameters designed to a fully dense part (e.g., 99.99% dense) usable for desired applications.

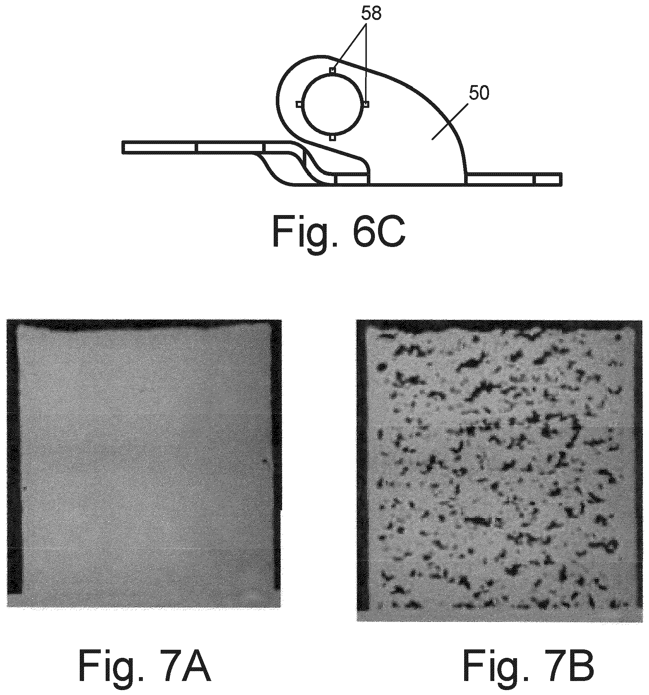

Figs. 6A-6C show an exemplary part or main body made using the process described above. In this case, the main body is a bracket 50 as depicted in Figs. 5A-5C and is designed to be attached to a parent part 32 using a threaded insert 42. Fig. 6A shows the bracket 50 of Fig. 5A having a hole 56 for a drill and tap operation as discussed above. The bracket 50 of Figs 6A and 6B can be made with any convenient manufacturing process, including but not limited to AM methods. Fig. 6B shows the bracket 50 of Fig 6A with the hole blanked out, as it may appear in an earlier point in the manufacturing process. Fig. 6C is a view of the bracket 50 indicating the plurality of locations 58 for formation of localized, higher porosity, lower strength regions designed to accept insertion of the keys. The number of localized, higher porosity, lower strength regions should at least equal the number keys associated with the threaded insert intended for use with the bracket 50 or other main body. For example, if the threaded insert will have two keys, at least two localized, higher porosity, lower strength regions should be formed in the bracket 50 or other main body. If desired, more localized, higher porosity, lower strength regions could be formed in the bracket 50 or other main body than the number of number keys associated with the threaded insert intended for use. For example, an area in the bracket 50 or other main body through which the threaded insert 42 is expected to be threaded (i.e., a hole or bore) may also be formed as a localized, higher porosity, lower strength region. The bracket depicted in Fig. 6C may be made with any suitable AM machine and method such that the main body of the bracket 50 is fully dense (e.g., 99.99% dense or as otherwise specified for the particular part or main body) as shown in Fig. 7A, which is a photomicrograph of fully dense materials. Fig. 7B is a photomicrograph of high porosity material made with any suitable AM machine and method and used for the localized, higher porosity, lower strength regions 58 of the bracket 50. A person of ordinary skill will understand that bracket 50 shown in Figs. 5A-5C and 6A-6C is merely one type of part or main body in which localized, higher porosity, lower strength regions designed to accept insertion of threaded insert keys can be formed. Any part or main body formed with an AM method that will be used with threaded inserts with corresponding threaded insert keys, can be made according to the techniques disclosed in this application.

After the part or main body is built as described above, a hole for the threaded insert can be drilled and tapped as discussed with regard to Figs. 2, and 3A- 3C to form a threaded bore in the part or main body. The threaded insert can then be inserted into (i.e., screwed into) the threaded bore as discussed with regard to Figs. 2 and 3D such that the plurality of keys associated with the threaded insert align with the plurality of localized higher porosity, lower strength regions. In some examples, the threaded insert will be screwed into the threaded bore such that a top portion of the threaded insert aligns with the top surface of the part or main body. In other examples, the threaded insert will be screwed into the threaded bore such that a top portion of the threaded insert sits in the countersink below the top surface of the part or main body. Once the threaded insert is screwed into the threaded bore and the plurality of keys associated with the threaded insert align with the plurality of localized higher porosity, lower strength regions, the keys can be driven into the plurality of localized higher porosity, lower strength regions as discussed with regard to Figs. 2 and 3E, mechanically deforming the local area, and securing the keys without the need to file or broach the inner bore.

The features and process disclosed in this application help to mitigate manual or automated post broaching or machining of thread features, which can lead to reduced part cost and lead time. The process requires no new tooling to install the threaded insert. As discussed, the process can be implemented for any additively manufactured parts intended for use with threaded inserts.

### Discussion of Possible Embodiments

The following are non-exclusive descriptions of possible embodiments of the present invention.

A part intended for use with a threaded insert, comprising a main body manufactured from fully dense material; and a plurality of localized higher porosity, lower strength regions configured to accept a plurality of keys from the threaded insert.

The part of the preceding paragraph can optionally include, additionally and/or alternatively, any one or more of the following features, configurations and/or additional elements:
A further embodiment of the foregoing part, wherein the main body includes a threaded bore configured to accept the threaded insert and wherein the plurality of localized higher porosity, lower strength regions surround a periphery of the threaded bore.

A further embodiment of the foregoing part, wherein the threaded insert is screwed into the threaded bore such that the plurality of keys from the threaded insert align with the plurality of localized, higher porosity, lower strength regions and the plurality of keys from the threaded insert are driven into the plurality of localized, higher porosity, lower strength regions to anchor the threaded inset into the part.

A further embodiment of the foregoing part, wherein the threaded insert and the plurality of keys have been removed from the threaded bore and wherein residual portions of the localized, higher porosity, lower strength regions remain detectible in the part.

A further embodiment of any of the foregoing parts, wherein the part is made from a superalloy material.

A further embodiment of the foregoing part, wherein the superalloy material is IN718.

A method of inserting a threaded insert into a part, comprises providing a part including: a main body manufactured from fully dense material; and a plurality of localized, higher porosity, lower strength regions configured to accept a plurality of keys from the threaded insert. A threaded bore is formed in the main body configured to accept the threaded insert, wherein a plurality of localized, higher porosity, lower strength regions surround a periphery of the threaded bore. A countersink is formed in the threaded bore, wherein the countersink is adjacent to a top surface of the part. The threaded insert is inserted into the threaded bore to position the threaded part at or below the top surface of the part, wherein a plurality of keys inserted into a plurality of dovetail slots established in external threads of the threaded insert align with the plurality of localized, higher porosity, lower strength regions. The plurality of keys is driven into the plurality of localized, higher porosity, lower strength regions to anchor the threaded inset into the part.

The method of the preceding paragraph can optionally include, additionally and/or alternatively, any one or more of the following features, configurations and/or additional elements:
A further embodiment of the foregoing method, wherein the part is made using additive manufacturing methods in which a portion of the part including the plurality of localized, higher porosity, lower strength regions is made by programming an additive manufacturing machine to operate in a high speed and low power regime, thereby forming a localized, higher porosity, lower strength material.

A further embodiment of the foregoing method, wherein the additive manufacturing machine is a laser powder bed fusion additive manufacturing machine.

A further embodiment of the foregoing method, wherein the additive manufacturing machine is an electron beam powder bed fusion additive manufacturing machine.

A further embodiment of any of the foregoing method, wherein the part is made from a superalloy material

A further embodiment of the foregoing method, wherein the superalloy material is IN718.

A method of making a part intended for use with a threaded insert, compriseing the steps of: operating an additive manufacturing machine to make a main body with fully dense material; and operating the additive manufacturing machine to make a plurality of localized, higher porosity, lower strength regions configured to accept a plurality of keys from the threaded insert.

The method of the preceding paragraph can optionally include, additionally and/or alternatively, any one or more of the following features, configurations and/or additional elements:
A further embodiment of the foregoing method, wherein the additive manufacturing machine is a laser powder bed fusion additive manufacturing machine.

A further embodiment of the foregoing method, wherein the additive manufacturing machine is an electron beam powder bed fusion additive manufacturing machine.

A further embodiment of any of the foregoing methods, wherein operating the additive manufacturing machine to make a plurality of localized, higher porosity, lower strength regions configured to accept a plurality of keys from the threaded insert includes programming the additive manufacturing machine to operate in a high speed and low power regime to form a localized, higher porosity, lower strength material.

A further embodiment of any of the foregoing methods, wherein the part is made from a superalloy material

A further embodiment of the foregoing method, wherein the superalloy material is IN718.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A part (32) intended for use with a threaded insert (10, 42), comprising:
a main body manufactured from fully dense material; and
a plurality of localized higher porosity, lower strength regions (58) configured to accept a plurality of keys (16, 44) from the threaded insert (10, 42).

2. The part (32) of claim 1, wherein the main body includes a threaded bore (34) configured to accept the threaded insert (10, 42) and wherein the plurality of localized higher porosity, lower strength regions (58) surround a periphery of the threaded bore (34).

3. The part (32) of claim 2, wherein the threaded insert (10, 42) is screwed into the threaded bore (34) such that the plurality of keys (16, 44) from the threaded insert (10, 42) align with the plurality of localized, higher porosity, lower strength regions (58) and the plurality of keys (16, 44) from the threaded insert (10, 42) are driven into the plurality of localized, higher porosity, lower strength regions (58) to anchor the threaded inset (10, 42) into the part (32).

4. The part (32) of claim 3, wherein the threaded insert (10, 42) and the plurality of keys (16, 44) have been removed from the threaded bore (34) and wherein residual portions of the localized, higher porosity, lower strength regions (58) remain detectible in the part (32).

5. The part (32) of any preceding claim, wherein the part (32) is made from a superalloy material.

6. The part (32) of claim 5, wherein the superalloy material is IN718.

7. A method of inserting a threaded insert (10, 42) into a part (32), comprising the steps of:
providing a part (32) including:
a main body manufactured from fully dense material; and
a plurality of localized, higher porosity, lower strength regions (58) configured to accept a plurality of keys (16, 44) from the threaded insert (10, 42);
forming in the main body a threaded bore (34) configured to accept the threaded insert (10, 42), wherein a plurality of localized, higher porosity, lower strength regions (58) surround a periphery of the threaded bore (34);
forming a countersink (36) in the threaded bore (34), wherein the countersink (36) is adjacent to a top surface (40) of the part (32);
inserting the threaded insert (10, 42) into the threaded bore (34) to position the threaded insert (10, 42) at or below the top surface (40) of the part (32), wherein a plurality of keys (16, 44) inserted into a plurality of dovetail slots (20) established in external threads (14) of the threaded insert (10, 42) align with the plurality of localized, higher porosity, lower strength regions (58); and
driving the plurality of keys (16, 44) into the plurality of localized, higher porosity, lower strength regions (58) to anchor the threaded insert (10, 42) into the part (32).

8. The method of claim 7, wherein the part (32) is made using additive manufacturing methods in which a portion of the part (32) including the plurality of localized, higher porosity, lower strength regions (58) is made by programming an additive manufacturing machine to operate in a high speed and low power regime, thereby forming a localized, higher porosity, lower strength material.

9. A method of making a part (32) intended for use with a threaded insert (10, 42), comprising the steps of:
operating an additive manufacturing machine to make a main body with fully dense material; and
operating the additive manufacturing machine to make a plurality of localized, higher porosity, lower strength regions (58) configured to accept a plurality of keys (16, 44) from the threaded insert (10, 42).

10. The method of claim 9, wherein operating the additive manufacturing machine to make a plurality of localized, higher porosity, lower strength regions (58) configured to accept a plurality of keys (16, 44) from the threaded insert (10, 42) includes programming the additive manufacturing machine to operate in a high speed and low power regime to form a localized, higher porosity, lower strength material.

11. The method of any of claims 7 to 10, wherein the additive manufacturing machine is a laser powder bed fusion additive manufacturing machine.

12. The method of any of claims 7 to 10, wherein the additive manufacturing machine is an electron beam powder bed fusion additive manufacturing machine.

13. The method of any of claims 7 to 12, wherein the part is made from a superalloy material.

14. The method of claim 13, wherein the superalloy material is IN718.
